# EUROPEAN PATENT SPECIFICATION

(11) **EP 1 535 718 B1**
(45) Date of publication and mention of the grant of the patent: **02.01.2008**
(21) Application number: 04106082.3
(22) Date of filing: 25.11.2004
(51) Int. Cl.: B29C 47/76, B29C 47/10

(54) **Process for removing volatile components from a filled thermoplast**
Verfahren zur Entfernung von flüchtigen Komponenten aus einem gefüllten thermoplastischen Polymer
Procédé d'extraction des composants volatiles d'un polymère thermoplastique avec charges

(30) Priority: 28.11.2003 EP 03027261
(43) Date of publication of application: 01.06.2005
(73) Proprietor: Borealis Technology Oy, 06201 Porvoo (FI)
(72) Inventor: Schininger, Renate, 4020 Linz (AT); Zopf, Ernst, 4222 St. Georgen/Gusen (AT); Jarzombek, Manfred, 4040 Linz (AT); Eggetsberger, Mario, 4615 Holzhausen (AT); Gruber, Marcus, 4020 Linz (AT)
(74) Representative: Grünecker, Kinkeldey, Stockmair & Schwanhäusser Anwaltssozietät

(56) References cited:
- EP-A- 0 172 436
- EP-A- 0 478 987
- EP-A- 1 321 279
- US-A1- 2002 165 289
- US-B1- 6 309 570

## Description

The invention refers to a process for the production of thermoplasts filled with talc or glassfibre having a low content of undesirable volatile components.

### Background of the Invention

Many thermoplasts contain fillers, either in order to enhance the properties of the thermoplast in one or the other direction or in order to reduce the costs by adding a low price filler. A combination of both targets is desirable.

One major problem in the production and during further processing of a filled thermoplast is the content of volatile components. Such components are already in the melt and/or are built during processing, and are volatile low molecular weight organic components. They can cause segregations in the processing unit and can be responsible for emissions, bad odour during further processing of the filled thermoplast and fogging due to emissions from the finished article. Therefore the amount of such components should be minimized.

So far volatile components are eliminated by evacuating the melt through one or more degassing ports located along the length of the extruder. To improve the effect of the vacuum it is also known to inject water or steam directly to the extruder via one or several barrels, and to eliminate the volatiles together with the injected water. This procedure is also known as water stripping.

But the results obtained by these methods are not satisfying if the filler is talc or glassfibre.

### Object of the Invention

The object of the invention is therefore to reduce the amount of undesirable volatile components in a thermoplast which is filled with talc or glassfibre thereby to enhance the quality of the filled thermoplast.

### Detailed description of the Invention

Surprisingly it has been found that the amount of undesirable volatile components in a thermoplasts which is filled with talc or glassfibre can significantly be reduced, if the filler is moistened with water just before contacting the molten thermoplast, and the mixture of steam and volatiles is removed before extruding the filled thermoplast.

The present invention therefore relates to a process for removing volatile components from a filled thermoplast in a compounder by feeding in and melting the thermoplast, adding a filler via a sidefeeder, applying a vacuum and extruding the filled thermoplast as pellet, semi-finished or finished product, which is characterised in that the filler is talc or glassfibre and is moistened with water or steam at the end of the sidefeeder whereupon the volatile components are removed together with the generated steam before leaving the extruder.

In carrying out the invention a thermoplast in the form of powder, flakes or pellets is fed to a compounding extruder and molten in a first section of the extruder. The thermoplast can be polyolefins such as polyethylenes, polypropylenes and their copolymers, polyamides such as nylon 6, nylon 66.

The preferred thermoplasts are polyethylenes, polypropylenes and their copolymers. The thermoplasts can contain additives such as stabilizers, pigments, coupling and other agents like α-and/or β-nucleating agents.

In the beginning of the second section of the extruder a sidefeeder is coupled and talc or glassfibre is fed into the sidefeeder. At the end of the sidefeeder water is added to the sidefeeder and the resulting mixture of talc or glassfibre and water is fed into the main extruder. A usual side feeder has a length of for example 100cm. For adding water into the side feeder it is possible to make an inlet hole at the end of the screws of the side feeder or to add an adapter which has to enable a short but thorough contact between the talc or glassfibre and the water.

It is further important, that the sidefeeder is completely filled before adding the water and remains completely filled. Thereby the forward moving filler in the sidefeeder acts as a plug, and no water can move back and reach the hopper of the side feeder, which would make it impossible to convey the filler any longer through the side feeder.

Also there are no degassing means in the main extruder shortly upstream and shortly downstream of the alignement of the sidefeeder. There can also be more than one sidefeeder.

The fillers are talc or glassfibre.

Talc has a particle size from 2 to 60 µm, any type of talc can be used, including compacted talc which still contains air between the compacted particles. Suitable talcs are talcs like HiTalc Premium HTP 05, HiTalc Premium HTP 1, HiTalc Premium HTP 2, HiTalc Premium HTP 3x, HiTalc Premium HTP 4 of IMI-FABI S.p.A. or talcs having similar properties.

Glassfibres are usually used as chopped fibres, having a length of 3 - 15 mm preferably of 4,5mm. Suitable glassfibers are glassfibers like Vetrotex EC13 4,5mm 968, PPG MaxiChop 3299 EC13 4,5mm.

Depending on the kind of filler and the desired properties of the final product, the amount of talc or glassfibre can vary between 1 - 70 % by weight, preferred from 20 - 40% by weight, of the filled thermoplast.

The amount of water depends on the kind of the filler and the desired effect and can vary from 0,1 -10 % by weight of the filled thermoplast, preferably from 0,2 - 5 % by weight, most preferred from 0,5 - 2 % by weight.

The third section of the extruder begins at the alignement of the sidefeeder to the extruder and ends with the dieplate. Vacuum is applied in the second part of said third section of the extruder, since water, talc, glassfibre and thermoplast-melt need some time to be mixed and to interact. The applied vacuum eliminates the volatiles, which were in thermoplast and/or had been built during processing together with the added water as steam.

The extruder contains means for heating, transporting, distributing, dispersing, kneading and mixing the components. Such means are applied in different kind, different number and different sequence, depending on the kind and structure of the thermoplast, kind and structure of the filler, the viscosity, the temperature of the moiety etc.

After building up pressure, the filled thermoplast can be obtained in any desired form, either in the form of pellets or granules or directly in the form of finished or semifinished products, such as plates, pipes, automotive parts like dashboards, bumpers, sillfinishers, rocker panels, small appliances or white goods.

Example 1 shows that the content of volatiles of a talcum filled thermoplast produced according to the invention is 23 µg/g, whereas the content of volatiles in a thermoplast produced according to the state of the art, i.e. without adding water or with direct injecting water is 46 µg/g (Comparative Example 3) respectively 30 µg/g (Comparative Example 4).

Example 2 similarly shows that the content of volatiles of a fibre filled thermoplast produced according to the invention is 15 µg/g, whereas the content of volatiles of the same thermoplast, but produced without adding water or with direct injecting water is 41 µg/g (Comparative Example 5) respectively 24 µg/g (Comparative Example 6).

The content of volatiles in the Examples was determined as emission of organic components according to Company Standards. Samples were stored for some time at elevated temperature and the gas above the sample was analysed quantitatively by gas chromatography.

The Company Standards of BOREALIS GmbH for determining emissions of organic components from non-metallic material are disclosed in the copending European patent application No. 02011247.0.

### Example 1

A corotating twin screw extruder, Werner & Pfleiderer ZSK40 having a screw speed of 300 rpm and a temperature profile of 190/220/225/230/230/230/220/210/200 °C was fed with a mixture of 61,5 % by weight of an elastomeric modified PP-homopolymer having an MFR (230 °C/2,16 kg) of 7,3 and 13 % by weight of a PP homopolymer, having an MFR (230 °C/2,16 kg) of 6,9 and 5,5 % by weight of stabilizers, colour batch and other additives.

Via the sidefeeder which was operated completely filled 20 % by weight of talc having a particle size of 20 µm were added together with 0,5 % by weight of water of the filled thermoplast which was dosed at the end of the sidefeeder. Further downstream of the extruder the moiety was degassed by applying a vacuum, whereby the volatiles were eliminated together with the steam. Pressure was built up and the filled thermoplast was obtained in the form of granules after passing the die plate.

The maximum through-put of the talc filled thermoplast was 80 kg/h. Content of volatiles in the granules: 23 µg/g

### Example 2

A corotating twin screw extruder, Werner & Pfleiderer ZSK40 having a screw speed of 300 rpm and a temperature profile of 190/220/220/225/230/225/220/210/200 °C was fed with 75 % by weight of a PP-homopolymer having an MFR (230 °C/2,16 kg) of 25,8 and 3,6 % by weight of coupling agents, stabilizers and other additives.

Via the sidefeeder which was operated completely filled 21,4 % by weight of Vetrotex EC 13, a chopped glass fibre of 4,5 mm length and a diameter of 11 µm was added together with 1 % by weight of water of the filled thermoplast which was dosed at the end of the sidefeeder. Further downstream of the extruder the moiety was degassed by applying vacuum, whereby the volatiles were eliminated together with the steam. Pressure was built up and the fibre filled thermoplast was obtained in the form of granules after passing the die plate.

The maximum through-put of the fibre filled thermoplast was 100 kg/h.

Content of volatiles in the granules: 15 µg/g

### Comparative Examples:

### Example 3

Using the same extruder configuration, working parameters and material as in Example 1 with the exception that no water was injected, the content of volatiles in the granules was 46 µg/g.

### Example 4

Using the same extruder configuration, working parameters and material as in Example 1 with the exception that 0,5 % by weight of water of the filled thermoplast was injected after the sidefeeder via an extruder barrel, the content of the volatiles in the granules was 30 µg/g.

### Example 5

Using the same extruder configuration, working parameters and material as in Example 2 with the exception that no water was injected, the content of volatiles in the granules was 41 µg/g.

### Example 6

Using the same extruder configuration, working parameters and material as in Example 2 with the exception that 1 % by weight of water of the filled thermoplast was injected after the sidefeeder via an extruder barrel, the content of the volatiles in the granules was 24 µg/g.

## Claims

1. Process for removing volatile components from a filled thermoplast in a compounder by feeding in and melting the thermoplast, adding a filler via a sidefeeder, applying a vacuum and extruding the filled thermoplast as pellet, semi-finished or finished product, **characterised in that** the filler is talc or glassfibre and is moistened with water or steam at the end of the sidefeeder whereupon the volatile components are removed together with the generated steam before extruding.

2. The process as claimed in claim 1, **characterized in that** the thermoplast is selected from the group consisting of polyolefins, their copolymers and polyamides.

3. The process as claimed in claim 1, **characterized in that** the thermoplast is selected from the group consisting of polyethylenes and polypropylenes and their copolymers.

4. The process as claimed in claim 1, **characterized in that** the filler is talc.

5. The process as claimed in claim 1, **characterized in that** the filler is glassfibre.

6. The process as claimed in claim 1, **characterized in that** the filler is moistened with water or steam in an amount of 0,1 -10 % by weight of the filled thermoplast.

7. The process as claimed in claim 1, **characterized in that** the filler is moistened with water or steam in an amount of 0,2 - 5 % by weight of the filled thermoplast.

## Patentansprüche

1. Verfahren zum Entfernen von flüchtigen Komponenten aus einem gefüllten thermoplastischen Polymer in einem Mischer durch Einspeisen und Schmelzen des thermoplastischen Polymers, Zusetzen eines Füllstoffs über eine seitliche Zufuhreinrichtung, Aufbringen eines Vakuums und Extrudieren des gefüllten thermoplastischen Polymers als Pellet, halbfertiges oder fertiges Produkt, **dadurch gekennzeichnet, dass** der Füllstoff Talk oder Glasfaser ist und mit Wasser oder Dampf an dem Ende der seitlichen Zufuhreinrichtung befeuchtet wird, wonach die flüchtigen Komponenten zusammen mit dem gebildeten Dampf vor dem Extrudieren entfernt werden.

2. Verfahren wie in Anspruch 1 beansprucht, **dadurch gekennzeichnet, dass** das thermoplastische Polymer ausgewählt ist aus der Gruppe bestehend aus Polyolefinen, ihren Copolymeren und Polyamiden.

3. Verfahren wie in Anspruch 1 beansprucht, **dadurch gekennzeichnet, dass** das thermoplastische Polymer ausgewählt ist aus der Gruppe bestehend aus Polyethylenen und Polypropylenen und ihren Copolymeren.

4. Verfahren wie in Anspruch 1 beansprucht, **dadurch gekennzeichnet, dass** der Füllstoff Talk ist.

5. Verfahren wie in Anspruch 1 beansprucht, **dadurch gekennzeichnet, dass** der Füllstoff Glasfaser ist.

6. Verfahren wie in Anspruch 1 beansprucht, **dadurch gekennzeichnet, dass** der Füllstoff mit Wasser oder Dampf in einer Menge von 0,1 bis 10 Gew.-% des gefüllten thermoplastischen Polymers befeuchtet wird.

7. Verfahren wie in Anspruch 1 beansprucht, **dadurch gekennzeichnet, dass** der Füllstoff mit Wasser oder Dampf in einer Menge von 0,2 bis 5 Gew.-% des gefüllten thermoplastischen Polymers befeuchtet wird.

## Revendications

1. Procédé d'élimination dans un mélangeur de composants volatils d'une matière thermoplastique chargée, comprenant l'introduction et la fusion de la matière thermoplastique, l'adjonction d'une charge par l'intermédiaire d'un dispositif d'alimentation latérale, l'application d'un vide et l'extrusion de la matière thermoplastique chargée, sous la forme de pastilles, d'un produit semi-fini ou d'un produit fini, **caractérisé en ce que** la charge est du talc ou de la fibre de verre et est humidifiée avec de l'eau ou de la vapeur d'eau à l'extrémité du dispositif d'alimentation latérale, les composants volatils étant éliminés avec la vapeur d'eau produite avant l'extrusion.

2. Procédé selon la revendication 1, **caractérisé en ce que** la matière thermoplastique est choisie dans le groupe constitué des polyoléfines, de leurs copolymères et des polyamides.

3. Procédé selon la revendication 1, **caractérisé en ce que** la matière thermoplastique est choisie dans le groupe constitué des polyéthylènes et des polypropylènes et de leurs copolymères.

4. Procédé selon la revendication 1, **caractérisé en ce que** la charge est du talc.

5. Procédé selon la revendication 1, **caractérisé en ce que** la charge est de la fibre de verre.

6. Procédé selon la revendication 1, **caractérisé en ce que** la charge est humidifiée avec de l'eau ou de la vapeur d'eau, en une quantité de 0,1 à 10 % en poids de la matière thermoplastique chargée.

7. Procédé selon la revendication 1, **caractérisé en ce que** la charge est humidifiée avec de l'eau ou de la vapeur d'eau, en une quantité de 0,2 à 5 % en poids de la matière thermoplastique chargée.
